# EUROPÄISCHE PATENTSCHRIFT

(11) **EP 1 319 382 B1**
(45) Veröffentlichungstag und Bekanntmachung des Hinweises auf die Patenterteilung: **26.07.2006**
(21) Anmeldenummer: 02026113.7
(22) Anmeldetag: 01.12.2002
(51) Int. Cl.: A61G 5/06

(54) **Treppensteigvorrichtung**
Stair climbing device
Dispositif pour monter les escaliers

(30) Priorität: 18.10.2002 DE 10248889; 13.12.2001 DE 10161217; 13.12.2001 DE 10161220
(43) Veröffentlichungstag der Anmeldung: 18.06.2003
(73) Patentinhaber: Ulrich Alber GmbH, 72461 Albstadt-Tailfingen (DE)
(72) Erfinder: Bitzer, Paul-Gerhard, 72461 Albstadt-Tailfingen (DE); Scheck, Franz, 72336 Balingen (DE); Göttle, Ferdinand, 72406 Bisingen (DE); Birmanns, Thomas, 72336 Balingen (DE)
(74) Vertreter: Staudt, Hans-Peter

(56) Entgegenhaltungen:
- DE-C- 10 018 578
- US-A- 5 036 929

## Beschreibung

Die Erfindung betrifft eine Treppensteigvorrichtung und insbesondere eine Treppensteigvorrichtung für Rollstühle.

Aus der DE 37 13 564 C2 ist eine motorisch betriebene Treppensteigvorrichtung bekannt, die dazu ausgelegt ist, einen Rollstuhl mit einer darin sitzenden Person durch eine Bedienperson hinauf oder hinab zu befördern. Hierbei muss die Bedienperson den sich aus der in dem Rollstuhl sitzenden Person, dem Rollstuhl und der Treppensteigvorrichtung ergebenden Gesamtschwerpunkt ständig ausbalancieren. Bei dem Steigvorgang erfolgt je nach verwendeter Antriebsvorrichtung ein periodischer Lastwechsel von Stufe zu Stufe, der ständige Korrekturen der Bedienperson erfordert. Würden derartige Korrekturen nicht korrekt durchgeführt, könnte es zu kritischen Situationen kommen, bei denen die Treppensteigvorrichtung zusammen mit dem Rollstuhl und dem Rollstuhlinsassen zu kippen drohen.

Die DE 100 18 516 C1 schlägt für eine derartige Treppensteigvorrichtung im Hinblick auf die Kippgefahr eine Kippsicherung vor. Sobald bei dieser bekannten Treppensteigvorrichtung eine Gefahr des Kippens droht, insbesondere im Falle eines kritischen Neigungswinkels der Treppensteigvorrichtung und eines daran befestigten Rollstuhls gegenüber der Treppe, wird eine Sensoreinrichtung zur Abgabe eines Warnsignals angesteuert. Für den Fall, dass trotz der Warnung die Bedienperson nicht in der Lage ist, die Treppensteigvorrichtung aus einer Lage, in der die Gefahr des Kippens droht, in eine Lage zu bringen, die ein sicheres Halten ermöglicht, wird eine Stützvorrichtung ausgefahren und der Steigvorgang unterbrochen.

Die DE 199 12 932 C1 schlägt für eine derartige Treppensteigvorrichtung zur Reduzierung von Lastwechselreaktionen vor, die Steigeinheit der Treppensteigvorrichtung zyklisch mit je nach Position der Steigelemente der Steigeinheit unterschiedlichen Antriebsgeschwindigkeiten zu betreiben. Hierzu wird die Antriebsgeschwindigkeit der Steigeinheit kurz vor dem Aufsetzen eines Steigelements auf dem nächstgelegenen Treppenabsatz gegenüber einer ersten vorbestimmten Antriebsgeschwindigkeit reduziert, so dass ein weiches Aufsetzen erreicht wird, und nach dem Aufsetzen auf dem nächstgelegenen Treppenabsatz wird die Antriebsgeschwindigkeit der Steigeinheit wieder auf die erste vorbestimmte Antriebsgeschwindigkeit erhöht.

Das der Erfindung zugrunde liegende technische Problem besteht darin, eine Treppensteigvorrichtung gemäß dem Oberbegriff des Patentanspruchs 1 bereit zu stellen, die dazu in der Lage ist, die Möglichkeit des Entstehens einer Kippgefahr erheblich zu minimieren.

Dieses technische Problem wird bei einer gattungsgemäßen Treppensteigvorrichtung erfindungsgemäß gelöst durch die kennzeichnenden Merkmale des Patentanspruchs 1. Vorteilhafte Ausgestaltungen der Erfindung sind in den Unteransprüchen angegeben.

Der Lastwechsel, dessen Beherrschung durch die Erfindung erleichtert wird, setzt dann ein, wenn beim Steigvorgang ein Steigelement, beispielsweise ein Räderpaar, auf der nächstgelegenen Stufe aufsetzt und anschließend das andere Steigelement beziehungsweise Räderpaar abhebt. Durch diesen Vorgang ändert sich der Auflagepunkt der Treppensteigvorrichtung. Geht man beispielsweise davon aus, dass der sich aus der in einem Rollstuhl sitzenden Person, dem Rollstuhl und der Treppensteigvorrichtung ergebende Gesamtschwerpunkt über dem zunächst auf einer Treppenstufe aufliegenden Steigelement beziehungsweise Räderpaar liegt, so dass kein Kippmoment auftritt, so wird nach dem Aufsetzen des zweiten Steigelements beziehungsweise Räderpaars und Abheben des ersten Steigelements beziehungsweise Räderpaars plötzlich ein Kippmoment erzeugt, da bei unveränderter Schwerpunktlage ein veränderter Auflagepunkt gegeben ist.

Als Reaktion auf dieses plötzlich auftretende Kippmoment muss bei einer Treppensteigvorrichtung gemäß dem Stand der Technik die Bedienperson sofort ein Gegenmoment erzeugen, d. h. die Bedienperson muss die Treppensteigvorrichtung an entsprechenden Haltegriffen zu sich heran ziehen oder von sich weg drücken. Die Lastwechselreaktion ist um so größer, je schwerer die in dem Rollstuhl sitzende Person und je größer der Abstand der beiden Steigelemente zueinander ist. Zudem können bei ungünstigen Treppengeometrien, beispielsweise bei einer steilen oder stark gewendelten Treppe, ungeübte Personen ein Gefühl der Unsicherheit haben, wenn diese Lastwechselreaktion auftritt. Die Unsicherheit entsteht insbesondere aus der Angst, dass die Kompensationskraft der Bedienperson zum Kompensieren der Lastwechselreaktion möglicherweise nicht ausreichend sein könnte oder nicht zum richtigen Zeitpunkt erfolgt.

Dieses Problem wird bei der erfindungsgemäßen Treppensteigvorrichtung durch die Bereitstellung einer Funktion gelöst, die es ermöglicht, dass die Kompensationskraft von der Bedienperson ohne Zeitdruck bereits eingeleitet werden kann, bevor die Lastwechselreaktion auftritt. Die erfindungsgemäße Treppensteigvorrichtung bietet somit die Möglichkeit, dass der Steigvorgang erst fortgeführt wird, wenn die Kompensationskraft ohne Zeitdruck und die damit verbundene Unsicherheit zur Verfügung steht.

Verwirklicht wird diese Möglichkeit gemäß den kennzeichnenden Merkmalen des Patentanspruchs 1 dadurch, dass die Steuereinrichtung dazu ausgelegt ist, den Betrieb des Steigelements so zu steuern, dass der Steigvorgang unterbrochen werden kann, wenn das Steigelement eine vorbestimmte Stellung erreicht.

Die in der Praxis besonders kritische Kippgefahr ist diejenige, bei der die Treppensteigvorrichtung zusammen mit dem Rollstuhl treppabwärts zu stürzen droht. Demgegenüber kann eine Kippneigung der Treppensteigvorrichtung zusammen mit dem Rollstuhl zum oberen Ende der Treppe hin als eher unkritisch angesehen werden, da dies nicht unmittelbar ein Abstürzen der Treppensteigvorrichtung und des Rollstuhls treppabwärts zur Folge hätte und insbesondere deshalb, weil eine diese Kippneigung kompensierende Kraft leichter von der oberhalb der Treppensteigvorrichtung befindlichen Bedienperson aufgebracht werden kann.

Wie zuvor erläutert, muss durch den Wechsel des Auflagepunktes dann, wenn das Steigelement mit dem nächstgelegenen Treppenabsatz einer Treppe in Berührung gelangt ist, die Treppensteigvorrichtung weiter zur Treppe hin geneigt werden. Wenn der Steigvorgang bei einer vorbestimmten Stellung des Steigelements, vorzugsweise kurz bevor das Steigelement den nächstgelegenen Treppenabsatz berührt, bei jedem Steigzyklus unterbrochen wird, kann die Bedienperson die Treppensteigvorrichtung in aller Ruhe und ohne großen Kraftaufwand weiter zu sich hin kippen. Erst wenn dieser Kippvorgang, der der Kompensation des Wechsels der Schwerpunktlage dient, erfolgreich vonstatten gegangen ist, wird bei einer entsprechenden Ausführungsform der Erfindung auf ein entsprechendes Wiederaufnahmesignal hin der Steigvorgang fortgesetzt. Als Wiederaufnahmesignal können beispielsweise Signale eines Haltekraftsensors, der die Kraft erfasst, mit der die Bedienperson die Treppensteigvorrichtung hält, oder Signale eines Neigungswinkelsensors, der den Neigungswinkel der Treppensteigvorrichtung erfasst, verwendet werden.

Die vorbestimmte Stellung des Steigelements, in der der Steigvorgang unterbrochen werden kann, ist vorzugsweise eine solche Stellung, in der der Gesamtschwerpunkt der aus der Treppensteigvorrichtung und der damit zu befördernden Last bestehenden Einheit zwischen dem Berührungspunkt des Steigelements mit einem Treppenabsatz und dem Berührungspunkt der Treppensteigvorrichtung mit dem nächstgelegenen Treppenabsatz liegt, wenn das Steigelement auf dem Treppenabsatz und die Treppensteigvorrichtung auf dem nächstgelegenen Treppenabsatz aufliegt. Es versteht sich, dass diese Bedingung durch einen bestimmten Stellungsbereich erfüllt wird, dessen einer Endpunkt dadurch gegeben ist, dass der Gesamtschwerpunkt über dem Berührungspunkt des Steigelements mit einem Treppenabsatz liegt, und dessen anderer Endpunkt dadurch gegeben ist, dass der Gesamtschwerpunkt über dem Berührungspunkt der Treppensteigvorrichtung mit dem nächstgelegenen Treppenabsatz liegt. Wie zuvor erwähnt wird die vorbestimmte Stellung des Steigelements, in der der Steigvorgang unterbrochen werden kann, vorzugsweise so gewählt, dass bei einem sicheren Neigungswinkel der Treppensteigvorrichtung das Steigelement bei der Bewegung treppaufwärts die nächste Stufe noch nicht berührt hat.

Es besteht auch die Möglichkeit, bei einer entsprechenden Ausführungsform der Erfindung den Steigvorgang nach einer vorbestimmten, gegebenenfalls einprogrammierbaren Zeitspanne automatisch wieder aufzunehmen. Diese Zeitspanne sollte dann so bemessen sein, dass der Bedienperson während der Unterbrechung des Steigvorgangs ausreichend Zeit zur Einstellung des richtigen Neigungswinkels bleibt.

Die Informationen, welche in der Steuereinrichtung der Treppensteigvorrichtung abgespeichert sein müssen, um dieser zu ermöglichen, die Unterbrechung des Steigvorgangs in der vorbestimmten Stellung des Steigelements zu bewirken, können auf unterschiedliche Weise eingegeben werden. Es besteht beispielsweise die Möglichkeit, exakte Abmessungen, beispielsweise Stufenhöhe und Stufentiefe oder auch die Stufenanzahl exakt einzugeben. Zudem können Durchschnittswerte bezüglich Stufenhöhe und Stufentiefe eingegeben werden. Des weiteren besteht bei einer bevorzugten Ausführungsform der Erfindung die Möglichkeit, ein Lernprogramm, einen sogenannten Programmiermodus vorzusehen, mit dem die Treppensteigvorrichtung auf eine bestimmte Treppe eingestellt werden kann. Diese Einstellung wird vorzugsweise vom Schulungspersonal bei der Übergabe der Treppensteigvorrichtung an den Endkunden vorgenommen.

Das Lernprogramm kann auch mit Hilfe einer Fuzzy-Logik verwirklicht werden.

Wie bereits erläutert, kann das Fortführen des Steigvorgangs in Abhängigkeit von einem Wiederaufnahmesignal erfolgen. Dieses Wiederaufnahmesignal kann durch die Betätigung eines Steigschalters durch die Bedienperson erfolgen. Der Steigschalter kann im Bereich der Griffeinheit angebracht sein. Die Bedienperson hat somit die Möglichkeit, nach der Unterbrechung des Steigvorgangs ohne zeitlichen Druck die für die sichere Fortsetzung des Steigvorgangs erforderliche Schwerpunktverlagerung zu bewirken und anschließend durch Betätigung des Steigschalters das Fortführen des Steigvorgangs einzuleiten.

Es besteht zudem die Möglichkeit, dass der Steigvorgang in Abhängigkeit von der Haltekraft der Bedienperson fortgesetzt wird. Hierzu weist die Treppensteigvorrichtung eine Sensoreinrichtung auf, die einen Haltekraftsensor aufweist, der dazu ausgelegt ist, die Haltekraft der Bedienperson zu erfassen. Das Wiederaufnahmesignal wird hierbei in Abhängigkeit von einem Signal des Haltekraftsensors ausgelöst. Es sind auch Kombinationen möglich, bei denen zur Fortsetzung des Steigvorgangs sowohl eine Betätigung des Steigschalters durch die Bedienperson als auch das Detektieren einer vorbestimmten Haltekraft erforderlich sind.

Der Begriff des Detektierens einer vorbestimmten Haltekraft kann hierbei zum Beispiel wahlweise oder kumulativ einen Absolutwert der Haltekraft, eine Richtung der Haltekraft, eine Änderung des Absolutwertes oder der Richtung der Haltekraft oder einen bestimmten Haltekraftverlauf umfassen. Beispielsweise kann der aktuelle Verlauf der Haltekraft über einen Steigzyklus für eine Stufe erfasst und mit einem abgespeicherten Verlauf der Haltekraft über einen Steigzyklus für eine Stufe verglichen werden.

Gemäß einer Ausführungsform der Erfindung kann das Unterbrechen des Steigvorgangs lediglich dann erfolgen, wenn festgestellt wird, dass ein kritischer Neigungswinkel vorliegt. Hierzu kann eine Sensoreinrichtung vorgesehen sein, die dazu ausgelegt ist, Betriebsparameter der Treppensteigvorrichtung zu detektieren. Die Steuereinrichtung ist in diesem Fall dazu ausgelegt, den Betrieb des Steigelements so zu steuern, dass der Steigvorgang kontinuierlich abläuft, solange ein oder mehrere für den Neigungswinkel relevante Betriebsparameter der Treppensteigvorrichtung innerhalb eines vorbestimmten Wertebereichs liegen, und dass der Steigvorgang unterbrochen wird, wenn die für den Neigungswinkel relevanten Betriebsparameter der Treppensteigvorrichtung außerhalb des vorbestimmten Wertebereichs liegen, wobei das Unterbrechen des Steigvorgangs in der vorbestimmten Stellung des Steigelements erfolgt und der Steigvorgang in Abhängigkeit von einem Wiederaufnahmesignal fortgesetzt wird. Mit anderen Worten, solange sich die Treppensteigvorrichtung in einem unkritischen Neigungswinkelbereich befindet, wird der Steigvorgang ununterbrochen durchgeführt. Erst wenn, beispielsweise mittels eines Neigungswinkelsensors oder eines Haltekraftsensors, der bei einem kritischen Neigungswinkel eine übermäßige Haltekraft detektieren würde, detektiert wird, dass sich der Neigungswinkel in einem kritischen Bereich befindet, wird der Steigvorgang unterbrochen, wobei das Unterbrechen des Steigvorgangs in der vorbestimmten Stellung des Steigelements erfolgt und der Steigvorgang anschließend in Abhängigkeit von einem Wiederaufnahmesignal fortgesetzt wird.

Gemäß einer anderen Ausführungsform der Erfindung wird der Steigvorgang jedes Mal unterbrochen, wenn sich das Steigelement in der vorbestimmten Stellung befindet.

Die Steuereinrichtung der erfindungsgemäßen Treppensteigvorrichtung kann auch dazu ausgelegt sein, die Antriebsgeschwindigkeit des oder der Steigelemente in Abhängigkeit von der Haltekraft der Bedienperson so zu variieren, dass die Lastwechselreaktion beim Steigvorgang reduziert wird. Hierzu kann beispielsweise der aktuelle Verlauf der Haltekraft über einen Steigzyklus für eine Stufe erfasst und mit einem abgespeicherten typischen oder vorhergehenden Verlauf der Haltekraft über einen Steigzyklus für eine Stufe verglichen werden. An charakteristischen Stellen des Verlaufs der Haltekraft kann die Antriebsgeschwindigkeit des Steigelements geändert werden, wobei jeweils in Betracht gezogen wird, ob es sich um eine Bewegung treppauf oder treppab handelt.

Die Steuereinrichtung kann auch in Abhängigkeit anderer Betriebsparameter verändernd auf die Antriebsgeschwindigkeit des Steigelements einwirken, insbesondere in Abhängigkeit von Signalen eines Geschwindigkeitsensors, eines Stufenkantensensors, eines Positionssensors zum Detektieren der momentanen Position des Steigelements oder eines Neigungswinkelsensors, der die Neigung der Gesamtvorrichtung in Bezug auf die Vertikale misst.

Es kann zudem vorgesehen sein, Warnsignale bei Gefahrensituationen auszugeben. Dies kann insbesondere in Abhängigkeit von Signalen eines Haltekraftsensors, eines Geschwindigkeitssensors, eines Stufenkantensensors, eines Positionssensors zum Detektieren der momentanen Position des oder der Steigelemente oder eines Neigungswinkelsensors erfolgen. Des weiteren besteht die Möglichkeit, die Steuereinrichtung programmierbar zu gestalten, damit der Benutzer die Funktionen seinen individuellen Bedürfnissen anpassen kann.

Die Erfindung wird im folgenden anhand eines bevorzugten Ausführungsbeispiels weiter erläutert unter Bezugnahme auf die Zeichnung, in der
Fig. 1 eine Seitenansicht einer Treppensteigvorrichtung während des Treppaufsteigens kurz vor dem Aufsetzen eines Radpaares auf die nächstfolgende Stufe zeigt;
Fig. 2 eine Seitenansicht der Treppensteigvorrichtung gemäß Fig. 1 während des Treppaufsteigens nach dem Aufsetzen eines Radpaares auf die nächstfolgende Stufe zeigt;
Fig. 3 eine Seitenansicht der Treppensteigvorrichtung gemäß Fig. 1 während des Treppaufsteigens kurz nach dem Abheben eines Radpaares von der vorhergehenden Stufe zeigt;
Fig. 4 eine schematische Darstellung eines an einer Steigeinheit befestigten Haltekraftsensors ist;
Fig. 5 eine Draufsicht auf den in Fig. 4 dargestellten Haltekraftsensor ist;
Fig. 6 eine Seitenansicht des in Fig. 4 dargestellten Haltekraftsensors ist;
Fig. 7 ein Ablaufdiagramm einer ersten Ausführungsform der Betriebsweise der erfindungsgemäßen Treppensteigvorrichtung ist;
Fig. 8 ein Ablaufdiagramm einer zweiten Ausführungsform der Betriebsweise der erfindungsgemäßen Treppensteigvorrichtung ist;
Fig. 9 ein Ablaufdiagramm einer dritten Ausführungsform der Betriebsweise der erfindungsgemäßen Treppensteigvorrichtung ist;
Fig. 10 ein Ablaufdiagramm eines ersten Programmier- bzw. Lernmodus einer Ausführungsform der erfindungsgemäßen Treppensteigvorrichtung ist und
Fig. 11 ein Ablaufdiagramm eines zweiten Programmier- bzw. Lernmodus einer Ausführungsform der erfindungsgemäßen Treppensteigvorrichtung ist.

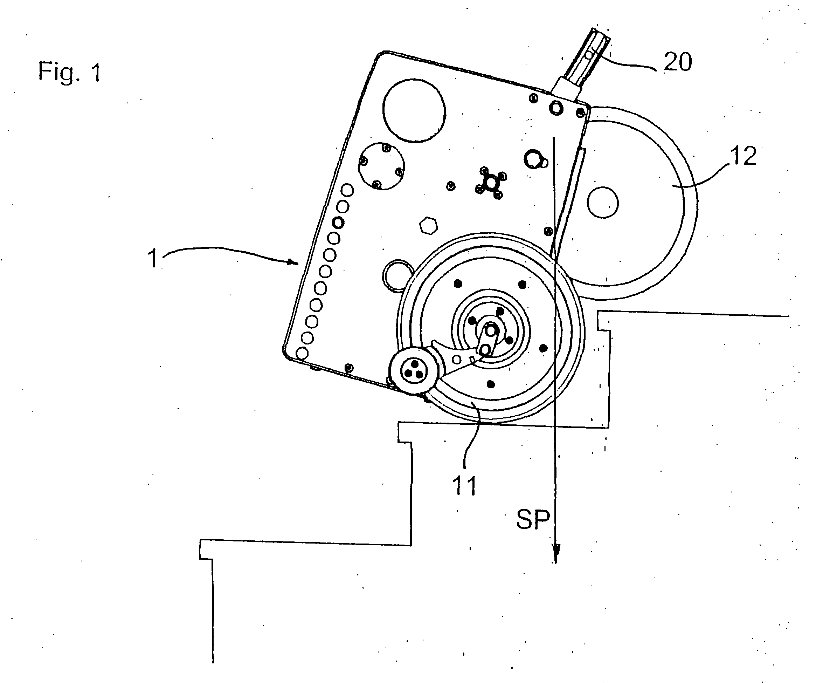

Die Figuren 1 bis 3 zeigen im Schnitt in schematischer Darstellung eine Treppensteigvorrichtung 1. Ein aus einem ersten Rad 11 und einem zweiten Rad 12 bestehendes erstes Räderpaar ist zusammen mit einem entsprechenden zweiten Räderpaar (nicht gezeigt) so ausgelegt, dass die Treppensteigvorrichtung eine Treppe hinauf und hinab bewegt werden kann. Hierzu können sich die Räder 11, 12 sowie die beiden entsprechenden nicht dargestellten Räder des zweiten Räderpaars nicht nur um ihre eigene Achse, sondern gleichzeitig um eine weitere Achse schwenken. Diese Art des Treppensteigmechanismus ist in der DE 199 12 932 C1 offenbart. Die zwei Räderpaare dienen als Steigelemente und bilden zusammen mit einer Antriebseinrichtung eine Steigeinheit.

An der Treppensteigvorrichtung sind eine oder mehrere Griffstangen 20 befestigt, die in den Figuren 1 bis 3 lediglich mit ihrem unteren Teilstück dargestellt sind. An dem oberen, in den Figuren nicht dargestellten Teilstück sind Griffe montiert, mit denen die Steigvorrichtung während des Betriebs von einer Bedienperson gehalten und geführt werden kann. Im Bereich der Griffe ist ein Steigschalter (nicht gezeigt) vorgesehen, mit dem der Steigvorgang von der Bedienperson eingeleitet und nach einer Unterbrechung fortgesetzt werden kann.

An der Treppensteigvorrichtung 1 kann ein Rollstuhl (nicht gezeigt) befestigt werden, beispielsweise dadurch, dass die Steigvorrichtung von hinten unter den Rollstuhl gefahren und mit entsprechenden Haltevorrichtungen an dem Rollstuhl befestigt wird. Nach dem Befestigungsvorgang kann die Steigvorrichtung zusammen mit dem Rollstuhl an eine Treppe herangefahren werden und durch zyklisches Drehen und Verschwenken der Räder zusammen mit dem Rollstuhl und einer darin befindlichen Person eine Treppe hinauf oder hinab bewegt werden.

Die Treppensteigvorrichtung 1 verfügt über mehrere Sensoren, insbesondere über jeweils mindestens einen Haltekraftsensor 100, der dazu ausgelegt ist, die Haltekraft der Bedienperson zu erfassen, sowie einen Geschwindigkeitssensor, einen Stufenkantensensor, einen Positionssensor zum Detektieren der momentanen Position der Steigelemente 11, 12 und einen Neigungswinkelsensor sowie über eine Steuereinrichtung (nicht dargestellt), die die Signale der Sensoren verarbeitet und die Antriebseinrichtung steuert.

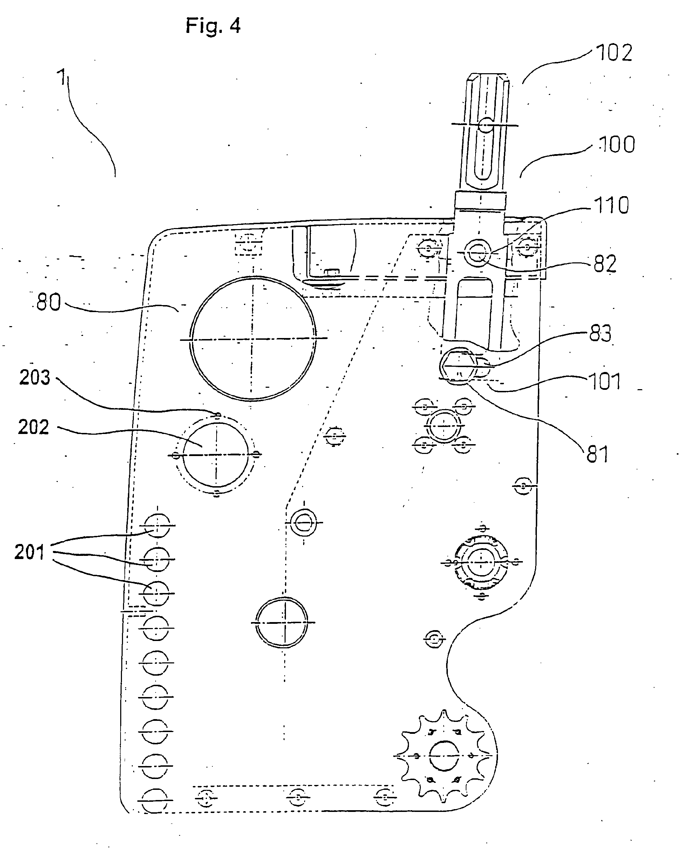

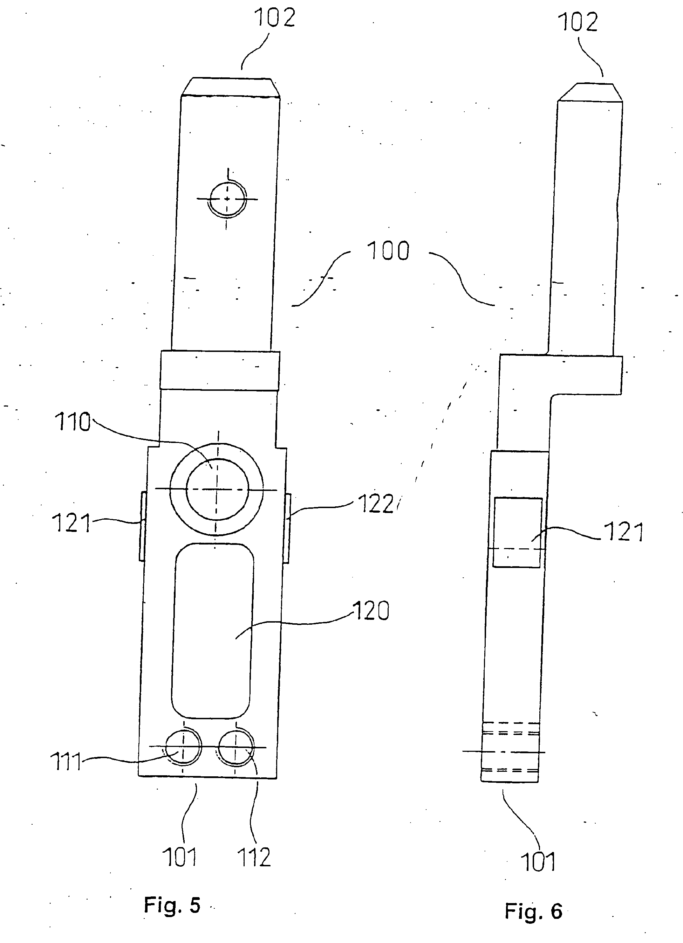

Fig. 4 zeigt schematisch den Grundkörper 80 der Steigeinheit der Treppensteigvorrichtung 1. Einzelheiten der Steigeinheit, insbesondere die Räderpaare und deren Antrieb sind zur Vereinfachung der Darstellung weggelassen. Ein Haltekraftsensor 100 ist mit seinem einen Ende 101 an dem Grundkörper 80 befestigt. Das gegenüberliegende Ende 102 des Haltekraftsensors 100 dient zur Aufnahme einer Greifstange 20. Wie insbesondere aus Fig. 5 ersichtlich, weist der Haltekraftsensor 100 eine Bohrung 110 auf, die als erster Befestigungspunkt an dem Grundkörper 80 dient. An dem Ende 101 des Haltekraftsensors 100 sind zwei Bohrungen 111, 112 vorgesehen, die wahlweise als zweiter Befestigungspunkt an dem Grundkörper 80 genutzt werden können.

Zur Befestigung des Haltekraftsensors 100 wird dieser mit seiner Bohrung 110 auf einen entsprechend dimensionierten Bolzen 82 aufgesteckt, der an dem Grundkörper 80 befestigt ist. Der Bolzen 82 ist hinsichtlich der Bohrung 110 so dimensioniert, dass der Haltekraftsensor 100 sich in Bezug auf den Grundkörper 80 um den Mittelpunkt des Bolzens 82 drehen kann. Die vollständige Befestigung des Haltekraftsensors 100 an der Steigeinheit 80 erfolgt durch eine Schraube 81, die durch ein Langloch 83 in dem Grundkörper 80 der Steigeinheit wahlweise mit der Gewindebohrung 111 oder 112 am Ende 101 des Haltekraftsensors 100 verschraubt ist. Durch die Bereitstellung eines Langlochs 83 in dem Grundkörper 80 der Steigeinheit sowie die Bereitstellung zweier Gewindebohrungen 111 und 112 in dem Haltekraftsensor 100 besteht die Möglichkeit, die Neigung der Griffeinheit zu verstellen. Die Befestigung zwischen dem Haltekraftsensor 100 und dem Grundkörper 80 der Steigeinheit erfolgt somit über zwei Befestigungspunkte, von denen einer, nämlich der durch die Bohrung 110 hindurchgesteckte Bolzen 82, als Drehpunkt ausgelegt ist.

Zwischen den beiden Befestigungspunkten ist in dem Haltekraftsensor 100 eine im wesentlichen rechtwinklige und mit abgerundeten Ecken versehene Ausnehmung 120 vorgesehen. Zu beiden Seiten der Ausnehmung 120 sind Dehnmessstreifen 121, 122 vorgesehen, die über eine Brückenschaltung, beispielsweise eine Wheatstone-Brücke miteinander gekoppelt sind.

Wenn die Treppensteigvorrichtung 1 durch Einleitung einer im wesentlichen senkrecht zur Griffstange 20 verlaufenden Kraft gekippt wird, bewirkt diese Kraft, dass im Bereich des Haltekraftsensors 100 ein Biegemoment erzeugt wird. Dieses Biegemoment hat zur Folge, dass der Haltekraftsensor 100 auf einer Seite der Ausnehmung 120 gedehnt und auf der gegenüberliegenden Seite gestaucht wird. Die Ausnehmung 120 sorgt somit für eine gezielte Verformung des in diesem Bereich als Federkörper ausgebildeten Haltekraftsensors 100. Die Verformung wird über die Dehnmessstreifen 121, 122 aufgenommen, die Signale der Dehnmessstreifen 121, 122 werden an die nicht gezeigte Steuereinrichtung weiter geleitet und dort verarbeitet.

Es versteht sich, dass an Stelle des in den Figuren dargestellten Haltekraftsensors andere Formen eines Haltekraftsensors verwendet werden können, beispielsweise ein T-förmiger Haltekraftsensor, der an seinen beiden kurzen freien Enden mit dem Grundkörper 80 der Steigeinheit verschraubt ist und dessen langes freies Ende zur Aufnahme einer Griffstange 20 dient.

Es besteht zudem die Möglichkeit, den Haltekraftsensor an einer anderen Stelle der Treppensteigvorrichtung 1 vorzusehen, beispielsweise im Bereich der Stelle, an der die Treppensteigvorrichtung 1 mit der zu befördernden Vorrichtung, beispielsweise einem Rollstuhl, verbunden ist. Bei der in Fig. 4 dargestellten Treppensteigvorrichtung 1 erfolgt die Verbindung zu einem Rollstuhl mittels eines jeweils seitlich an einer Bohrung 202 angebrachten Bolzens (nicht gezeigt), der über vier Schraublöcher 203 an der Treppensteigvorrichtung 1 verschraubt werden kann, sowie über eine Hakenvorrichtung (nicht gezeigt), die über ein Gestänge (nicht gezeigt) mit einer von neun Bohrungen 201 in der Treppensteigvorrichtung 1 befestigt werden kann. Abhängig von der Schwerpunktlage des Rollstuhls und der darin sitzenden Person werden dieser Bolzen sowie dieses Gestänge unterschiedlich stark und in unterschiedlichen Richtungen mit Kräften beaufschlagt. Diese Kräfte können gemessen werden, zum Beipiel über hieraus resultierende Biegespannungen, und diese Messergebnisse können für die Steuerung der Treppensteigvorrichtung verwendet werden.

Es versteht sich, dass Haltekraftsensoren an verschiedenen Stellen jeweils einzeln oder gemeinsam vorgesehen sein können und dass die Steuerung sowohl die Signale eines als auch die Signale mehrerer Haltekraftsensoren verwenden kann.

Es versteht sich zudem, dass an Stelle der Dehnmessstreifen oder zusätzlich hierzu andere Sensorsysteme verwendet werden können, beispielsweise induktive Systeme, optoelektronische Sensoren oder dergleichen. Es besteht zudem die Möglichkeit, neben den die Haltekraft detektierenden Sensoren solche Sensoren vorzusehen, die andere charakteristische Kenngrößen des Betriebs der Treppensteigvorrichtung erfassen, beispielsweise einen Neigungswinkelsensor, der den Neigungswinkel der Treppensteigvorrichtung detektiert, einen Beschleunigungssensor, einen Abstandssensor, der den Abstand oder das Vorhandensein einer unterhalb oder oberhalb der Treppensteigvorrichtung befindlichen Stufe oder eines Absatzes erfasst, einen Griffsensor, der erkennt, ob die Bedienperson die Griffeinheit hält und einen Positionssensor, der feststellt, in welcher Stellung sich die Räder 11, 12 des ersten Räderpaars sowie die entsprechenden Räder des zweiten Räderpaars befinden.

Die Treppensteigvorrichtung 1 kann mit einem Rollstuhl verbunden werden und die aus Treppensteigvorrichtung 1, Rollstuhl und Rollstuhlinsassen bestehende Einheit kann bis an den Rand einer Treppe herangefahren werden. Hierbei schiebt die Bedienperson die Treppensteigvorrichtung mit dem daran befestigten Rollstuhl üblicherweise vor sich her. Bei Annäherung an das untere Ende einer Treppe wendet die Bedienperson die aus Treppensteigvorrichtung 1, Rollstuhl und Rollstuhlinsassen bestehende Einheit, so dass sie zwischen dieser Einheit und der Treppe steht und den Steigvorgang im Rückwärtsgehen durchführen kann. Diese Wendung ist beim Annähern an den oberen Rand einer Treppe nicht erforderlich, da das Treppenabsteigen in Vorwärtsrichtung erfolgt.

In beiden Fällen ist jedoch ein Ankippen der Treppensteigvorrichtung erforderlich, bei dem die Bedienperson die Griffeinheit zu sich hinzieht, um die aus Treppensteigvorrichtung 1, Rollstuhl und Rollstuhlinsassen bestehende Einheit in eine geneigte Lage zu bringen, die ein Aufsteigen oder Absteigen der Treppe ermöglicht. Die bei diesem Ankippen auftretenden Kräfte sowie Änderungen des Neigungswinkels und des Abstandes bestimmter Teile der Treppensteigvorrichtung von dem Boden werden durch die Sensoren erfasst, welche entsprechende Signale an die Steuereinrichtung abgeben. Anhand der Signale erkennt die Steuereinrichtung durch Vergleich mit gespeicherten typischen Signalverläufen beziehungsweise Grenzwerten den Ankippvorgang.

Wenn nach dem Steigvorgang das Treppenende erreicht ist, bringt die Bedienperson die aus der Treppensteigvorrichtung 1, dem Rollstuhl und dem Rollstuhlinsassen bestehende Einheit von der geneigten Lage wieder in die vertikale Lage.

Der Steigvorgang in einem grundsätzlichen Ablauf wird nachfolgend unter spezieller Betrachtung der erforderlichen Haltekräfte erläutert.

Fig. 1 zeigt eine Seitenansicht der Treppensteigvorrichtung 1 während des Treppaufsteigens kurz vor dem Aufsetzen eines Radpaares auf die nächstfolgende Stufe. Die Treppensteigvorrichtung 1 wird hierbei von der Bedienperson an den Griffen (nicht gezeigt) so gehalten, dass sich der Gesamtschwerpunkt SP aus der in dem Rollstuhl sitzenden Person, dem Rollstuhl und der Treppensteigvorrichtung 1 zwischen der Bedienperson und dem auf der unteren Treppenstufe aufliegenden Rad 11 befindet, wie in Fig. 1 durch den Pfeil SP dargestellt. Bei dieser Schwerpunktlage würde die Treppensteigvorrichtung mit dem Rollstuhl und der darin sitzenden Person somit ohne die Haltekraft der Bedienperson zu der Bedienperson hin kippen. Diese Gesamtschwerpunktlage ist im allgemeinen für eine Bedienperson besser zu handhaben als eine solche Gesamtschwerpunktlage, bei der die Treppensteigvorrichtung mit dem Rollstuhl und der darin sitzenden Person ohne die Haltekraft der Bedienperson von dieser weg treppabwärts kippen würde. Mit anderen Worten, es fällt der Bedienperson üblicherweise leichter, die Treppensteigvorrichtung von sich weg zu drücken, was in der Regel einem Halten der Griffe ähnlich dem Halten einer Schubkarre entspricht, als die Treppensteigvorrichtung zu sich hinzuziehen.

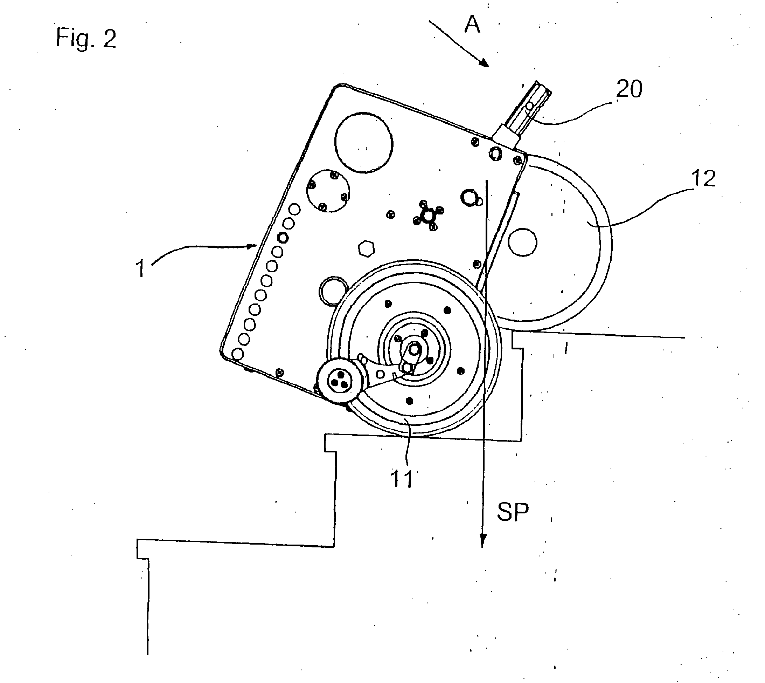

Fig. 2 zeigt die Treppensteigvorrichtung 1 in der nächsten Phase des Treppaufsteigens, nämlich zu dem Zeitpunkt, da das Rad 12 gerade mit der nächstfolgenden Stufe in Berührung gelangt ist. Nimmt man hierbei eine unveränderte Lage des Gesamtschwerpunktes SP an, wie dies durch den Pfeil in Fig. 2 dargestellt ist, so ergibt sich eine stabile Gesamtlage der Einheit aus Treppensteigvorrichtung 1, Rollstuhl und darin sitzender Person, da der Gesamtschwerpunkt SP zwischen den beiden Radpaaren 11, 12 liegt. Unter der Voraussetzung, dass sich die Schwerpunktlage nicht beispielsweise durch eine Bewegung der in dem Rollstuhl sitzenden Person verändert, könnte in dieser Phase die Treppensteigvorrichtung 1 sogar von der Bedienperson losgelassen werden, ohne dass eine Kippgefahr bestünde. Würde bei der in Fig. 2 dargestellten Lage des Gesamtschwerpunktes SP das Rad 11 nicht mehr mit der unteren Stufe in Berührung stehen, entstünde ein Kippmoment, das treppabwärts gerichtet wäre und von der Bedienperson dadurch aufgefangen werden müsste, dass diese die Treppensteigvorrichtung 1 zu sich hinzieht. Diese Momentenlage würde dann auftreten, wenn die Steigbewegung fortgesetzt würde, ohne dass die Schwerpunktlage zunächst verändert würde.

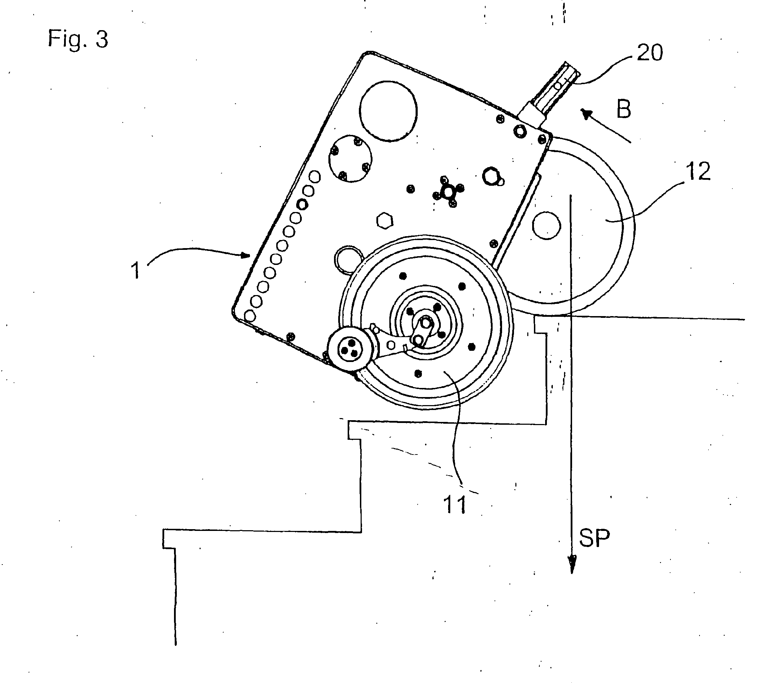

Zur Vermeidung dieses unerwünschten Zustands muß daher bei der Fortführung des Steigvorgangs die Treppensteigvorrichtung zusammen mit dem Rollstuhl und der darin sitzenden Person zunächst treppaufwärts, d. h. in Richtung der Bedienperson gekippt werden, damit bei der Fortführung des Steigvorgangs, wie sie in Fig. 3 dargestellt ist, wiederum ein Kippmoment entsteht, das in Richtung der Bedienperson, d. h. treppaufwärts gerichtet ist.

Wenn der Steigvorgang dann unterbrochen wird, wenn sich ein Radpaar gerade kurz vor dem Aufsetzen auf die nächstfolgende Stufe befindet, kann durch ein leichtes weiteres Neigen der Treppensteigvorrichtung treppaufwärts, d. h. in Richtung der Bedienperson, sowohl der bei Fortführung des Steigvorgangs sich verändernden Schwerpunktlage Rechnung getragen als auch ein sanftes Aufsetzen auf die nächste Stufe bewirkt werden. Die Unterbrechung des Steigvorgangs an dieser Stelle ist auch aus einem weiteren Grunde vorteilhaft. Sollte sich nämlich die Schwerpunktlage beim Aufsetzen des Radpaares auf die nächste Stufe, d.h. ohne eine vorherige Unterbrechung des Steigvorgangs, in einer Stellung befinden, die ein Kippen treppabwärts bewirken könnte, würde ein Neigen der Treppensteigvorrichtung treppaufwärts, d. h. in Richtung der Bedienperson, eine größere Kraft erfordern verglichen mit der Kraft, die erforderlich ist, wenn das Radpaar noch nicht mit der Stufe in Berührung gekommen ist.

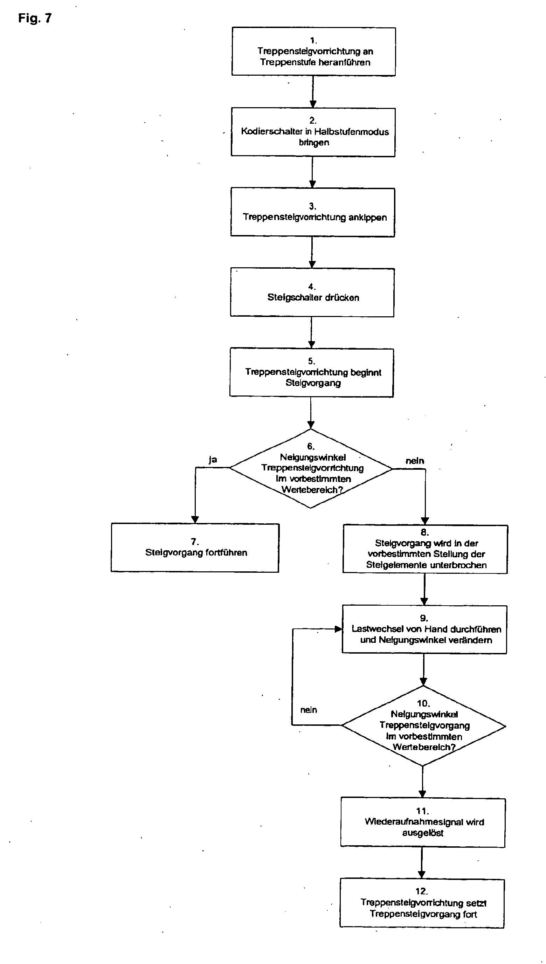

Eine geübte Bedienperson kann die zuvor beschriebene Kompensation der Lastwechselreaktion bei einer gleichmäßigen Antriebsgeschwindigkeit der Steigeinheit beziehungsweise der einzelnen Steigelemente kompensieren. Insbesondere für solche geübte Bedienpersonen eignet sich die nachfolgend erläuterte Ausführungsform einer Betriebsweise der erfindungsgemäßen Treppensteigvorrichtung, die in Fig. 7 als Form eines schematischen Ablaufdiagramms dargestellt ist.

Wie weiter oben beschrieben, wendet die Bedienperson bei Annäherung an das untere Ende einer Treppe die als Treppensteigvorrichtung 1, Rollstuhl und Rollstuhlinsassen bestehende Einheit, so dass sie zwischen dieser Einheit und der Treppe steht und den Steigvorgang im Rückwärtsgehen durchführen kann. Nachdem ein Codierschalter (nicht dargestellt) in eine Stellung gebracht wurde, die einem sogenannten Halbstufenmodus entspricht, zieht die Bedienperson die Griffeinheit zu sich hin, um die als Treppensteigvorrichtung 1, Rollstuhl und Rollstuhlinsassen bestehende Einheit in eine geneigte Lage zu bringen. Sobald der Schwerpunkt entsprechend ausbalanciert ist, wird ein an der Griffeinheit vorgesehener Steigschalter von der Bedienperson gedrückt. Während des nunmehr beginnenden Treppensteigvorgangs wird der Neigungswinkel der Treppensteigvorrichtung kontinuierlich überwacht. Hierzu werden mittels einer Sensoreinrichtung, die unterschiedliche Sensoren beinhalten kann, Betriebsparameter der Treppensteigvorrichtung überwacht, die für den Steigvorgang relevant sind. Die Sensoreinrichtung kann beispielsweise einen Neigungswinkelsensor aufweisen, der die Neigung der Treppensteigvorrichtung detektiert. Zudem kann die Sensoreinrichtung einen Haltekraftsensor der zuvor beschriebenen Art sowie andere geeignete Sensoren aufweisen.

Solange anhand der von der Sensoreinrichtung detektierten Parameter ersichtlich ist, dass der Neigungswinkel der Treppensteigvorrichtung sich in einem unkritischen Bereich befindet, wird der Steigvorgang kontinuierlich fortgeführt. Wird demgegenüber festgestellt, dass sich der Neigungswinkel in einem kritischen Bereich befindet, wird der Steigvorgang unterbrochen, wobei das Unterbrechen des Steigvorgangs in einer vorbestimmten Stellung der als Steigelemente dienenden Räderpaare 11 und 12 erfolgt, in der sich das eine Radpaar 12 oberhalb des nächstgelegenen Treppenabsatzes befindet, wie in Fig. 1 dargestellt. In dieser Stellung ist, wie zuvor erläutert, ein weiteres Neigen der Treppensteigvorrichtung zur Bedienperson hin relativ einfach möglich, sodass dem besonders kritischen Fall der Sturzgefahr treppabwärts entgegengewirkt werden kann. Sobald die Sensoreinrichtung Werte detektiert, die eine unkritische Winkellage ergeben, wird ein Wiederaufnahmesignal ausgelöst, welches bewirkt, dass der Steigvorgang fortgesetzt wird.

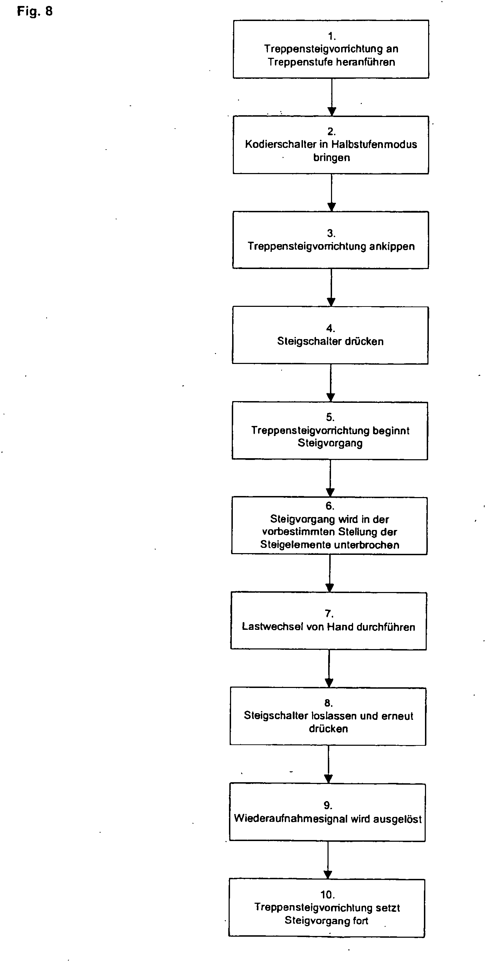

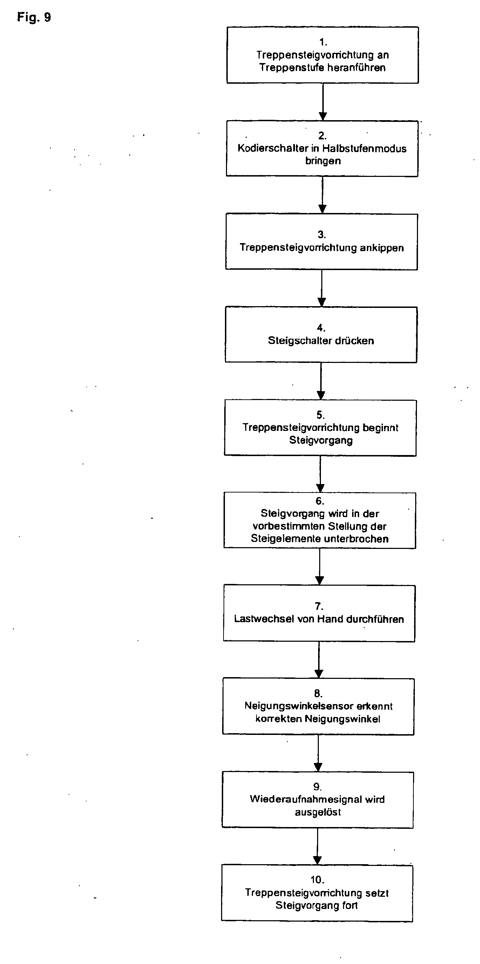

Eine zweite Ausführungsform der Betriebsweise der erfindungsgemäßen Treppensteigvorrichtung ist in Form eines schematischen Ablaufdiagramms in Fig. 8 dargestellt. Dieser Betriebsmodus unterscheidet sich von dem Betriebsmodus gemäß Fig. 7 dadurch, dass der Steigvorgang jedes Mal unterbrochen wird, bevor das Radpaar den nächstgelegenen Treppenabsatz berührt. Dies ermöglicht es der Bedienperson, die Schwerpunktlage vor dem Aufsetzen ohne Zeitdruck zu verändern. Das Fortführen des Steigvorgangs wird dadurch bewirkt, dass der Steigschalter losgelassen und erneut gedrückt wird. Hierdurch wird ein Wiederaufnahmesignal ausgelöst, welches die Steuereinrichtung der Treppensteigvorrichtung veranlasst, den Steigvorgang fortzusetzen.

Es versteht sich, dass dem Fachmann anstelle des beschriebenen Steigschalters vielfältige Möglichkeiten zur Verfügung stehen, die es der Bedienperson erlauben, Steigsignale und Wiederaufnahmesignale auszulösen. So kann beispielsweise ein Steigschalter vorgesehen sein, der den Steigvorgang initiiert, und zusätzlich ein separates Wiederaufnahmeschaltelement, das die Wiederaufnahme des Steigvorgangs nach dessen Unterbrechung einleitet.

Der Betriebsmodus gemäß Fig. 8 eignet sich besonders für Bedienpersonen, die sich in der Handhabung der Treppensteigvorrichtung etwas unsicher sind, da die Unterbrechung des Steigvorgangs beliebig lange andauern kann und eine Fortführung des Steigvorgangs nur auf ausdrücklichen Wunsch der Bedienperson erfolgt.

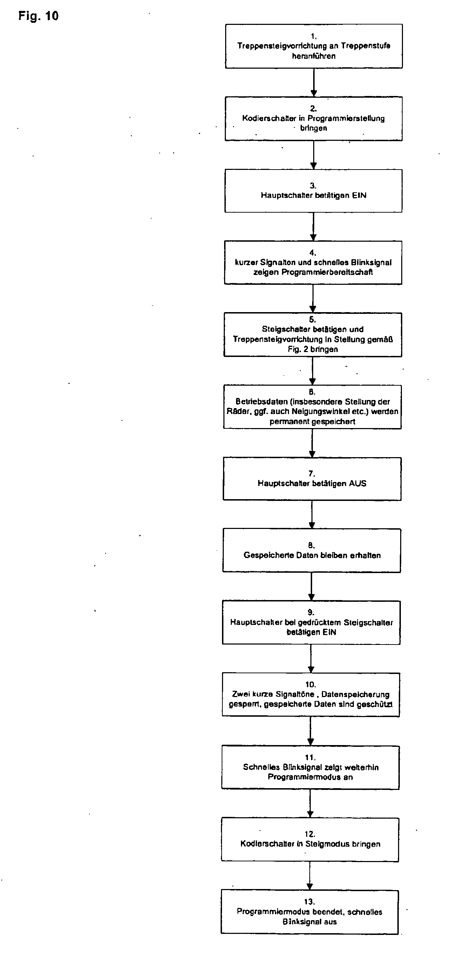

Eine weitere Betriebsweise der erfindungsgemäßen Treppensteigvorrichtung ist in Form eines schematischen Ablaufdiagramms in Fig. 9 dargestellt. Diese Betriebsweise gleicht derjenigen gemäß Fig. 8 insofern, als der Steigvorgang immer in der vorbestimmten Stellung des Steigelements, d.h. der Räderpaare 11, 12 unterbrochen wird. Der Betriebsmodus gemäß Fig. 9 unterscheidet sich von demjenigen gemäß Fig. 8 jedoch dadurch, dass das Wiederaufnahmesignal nicht durch Betätigen eines Schaltelements durch die Bedienperson, sondern selbsttätig durch die Treppensteigvorrichtung ausgelöst wird, nämlich dann, wenn eine entsprechende Schwerpunktlage erreicht ist. Diese Schwerpunktlage bzw. der korrekte Neigungswinkel kann zum Beispiel durch einen Neigungswinkelsensor oder andere geeignete Sensoren ermittelt werden.

In Abwandlung des Betriebsmodus gemäß Fig. 9 besteht zudem die Möglichkeit, nach der Unterbrechung des Steigvorgangs in einem vorbestimmten zeitlichen Abstand, der programmierbar sein kann, die Wiederaufnahme des Steigvorgangs automatisch einzuleiten.

Im folgenden wird eine bevorzugte Ausführungsform eines Programmier- bzw. Lernmodus der erfindungsgemäßen Treppensteigvorrichtung erläutert, der in Form eines schematischen Ablaufdiagramms in Fig. 10 dargestellt ist.

Nach dem Heranführen der Treppensteigvorrichtung an die unterste Stufe einer Treppe wird der Codierschalter in eine Programmierstellung bzw. Lernstellung gebracht. Anschließend wird ein Hauptschalter (nicht gezeigt) betätigt und die Treppensteigvorrichtung damit eingeschaltet. Ein kurzer Signalton ertönt daraufhin und ein schnelles Blinksignal zeigt die Programmierbereitschaft der Treppensteigvorrichtung an.

Die Bedienperson bringt die Treppensteigvorrichtung in eine für den Steigvorgang geeignete Stellung und betätigt daraufhin den Steigschalter zum Bewirken eines Steigvorgangs treppaufwärts. Dieser Steigschalter ist so ausgeführt, dass bei Betätigung in einer ersten Position die Räderpaare 11 und 12 so bewegt werden, dass ein Steigvorgang treppaufwärts erfolgt, und bei Betätigung in einer zweiten Position die Räderpaare 11 und 12 so bewegt werden, dass ein Steigvorgang treppabwärts erfolgt. Der Steigschalter wird solange betätigt, bis die in Fig. 2 dargestellte Position erreicht ist, und dann losgelassen. Mit anderen Worten, die aus Rollstuhl, Treppensteigvorrichtung und Rollstuhlinsasse bestehende Einheit wird in eine Lage gebracht, in der beide Räderpaare 11, 12 jeweils auf einer Stufe aufliegen und der Gesamtschwerpunkt SP der aus Rollstuhl, Treppensteigvorrichtung und Rollstuhlinsasse bestehenden Einheit zwischen den beiden Auflagepunkten der Räderpaare 11, 12 liegt. Hierzu wird der Steigschalter gegebenenfalls abwechselnd in der ersten und der zweiten Position betätigt, d.h. die Treppensteigvorrichtung geringfügig in Richtung einer Bewegung treppaufwärts oder treppabwärts bewegt, bis der Gleichgewichtszustand gemäß Fig. 2 erreicht ist.

Jedesmal, wenn der Steigschalter nicht mehr betätigt wird, wird die jeweilige Stellung der Räderpaare 11, 12 gespeichert. Je nach Ausführungsform können auch andere Betriebsparameter, insbesondere ein Neigungswinkel, erfasst und gespeichert werden. Wenn die Endstellung gemäß Fig. 2 erreicht ist, wird der Hauptschalter betätigt und die Vorrichtung ausgeschaltet. Die gespeicherten Daten bleiben hierbei erhalten. Wenn anschließend der Hauptschalter bei gedrücktem Steigschalter erneut betätigt wird, ertönen wiederum zwei kurze Signaltöne, die anzeigen, dass die Datenspeicherung gesperrt ist und die gespeicherten Daten geschützt sind. Da der Codierschalter zu diesem Zeitpunkt noch nicht wieder betätigt wurde, zeigt ein schnelles Blinksignal weiterhin den Programmiermodus an. Erst wenn die Bedienperson den Codierschalter in die für den Steigmodus erforderliche Stellung bringt, wird der Programmiermodus beendet und das schnelle Blinksignal erlischt.

Die Stellung der Räderpaare 11, 12 in der Stellung der Treppensteigvorrichtung gemäß Fig. 2 und gegebenfalls weitere relevante Betriebsparameter in dieser Stellung sind nunmehr abgespeichert. Dieser Stellung wird ein Offset-Wert hinzugefügt, der gegebenenfalls je nach Bedarf unterschiedlich einprogrammiert werden kann. Die Treppensteigvorrichtung unterbricht beim Betrieb im Steigmodus gemäß Fig. 8 und 9 und im Steigmodus gemäß Fig. 7, sofern der Neigungswinkel nicht im vorbestimmten Wertebereich liegt, den Steigvorgang immer dann, wenn die Stellung der Räderpaare 11, 12 der nach Beendigung der Lernmodus abgespeicherten Stellung, geändert um den Offset-Wert, entspricht.

Durch Bereitstellung dieses Offset-Wertes wird erreicht, dass die Treppensteigvorrichtung beim Steigvorgang treppaufwärts, sofern der gleiche Neigungswinkel wie während des Lernmodus beibehalten wird, in einer Stellung gemäß Fig. 1 den Steigvorgang unterbricht, d.h. bevor das Räderpaar 12 die nächste Stufe berührt. Sollte ein kleinerer Neigungswinkel gegeben sein und der Gesamtschwerpunkt SP der aus Rollstuhl, Treppensteigvorrichtung und Rollstuhlinsasse bestehenden Einheit während des Steigvorgangs zu weit vorne liegen, d.h. in der Darstellung gemäß Fig. 1 nach links verschoben sein, so hätte die Bedienperson nach dem Unterbrechen des Steigvorgangs die Möglichkeit, die Treppensteigvorgang zu sich heranzuziehen und in die stabile Lage gemäß Fig. 2 zu bringen, bevor sich die Schwerpunktlage beim Übergang in die Stellung gemäß Fig. 3 weiter verschlechtert.

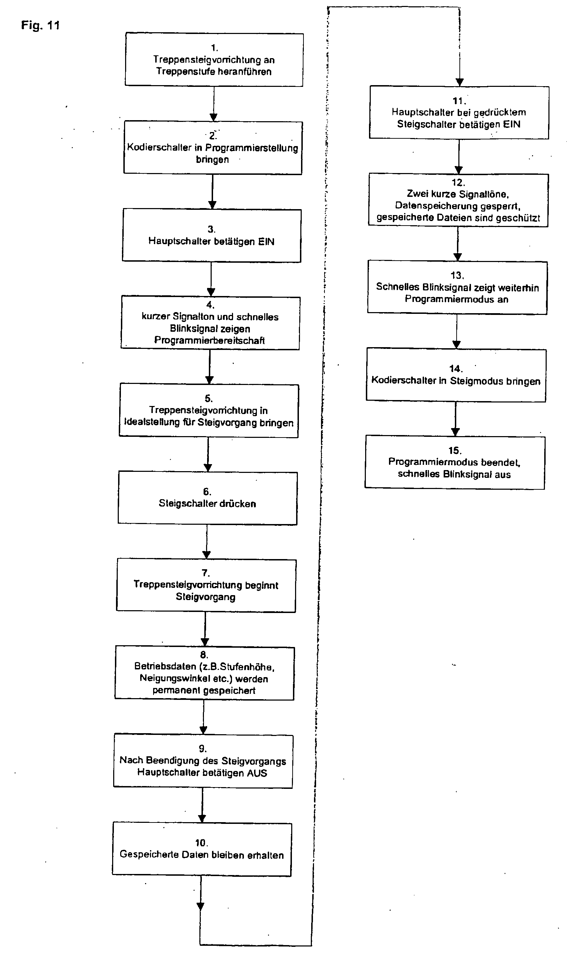

Eine zweite Ausführungsform eines Programmier- bzw. Lernmodus der erfindungsgemäßen Treppensteigvorrichtung ist in Form eines schematischen Ablaufdiagramms in Fig. 11 dargestellt.

Die Bedienperson bringt die Treppensteigvorrichtung in eine für den Steigvorgang ideale Stellung und drückt daraufhin den Steigschalter. Während des daraufhin ablaufenden Steigvorgangs werden Betriebsdaten erfasst und permanent gespeichert. Diese Betriebsdaten können beispielsweise die Stufenhöhe, den jeweiligen Neigungswinkel und dergleichen beinhalten. Hierzu wird unter anderem der zeitliche Verlauf der Stromstärke des den Steigvorgang bewirkenden Elektromotors überwacht. Wenn sich ein Radpaar auf einer Stufe befindet und das andere Radpaar aufwärts bewegt wird, wird hierzu nur ein relativ geringer Strom benötigt. Wenn dieses zweite Radpaar mit der nächstgelegenen Stufe in Berührung gelangt und daraufhin die Treppensteigvorrichtung anhebt, wird durch die hierzu benötigte Kraft ein deutlich höherer Strom benötigt. Der zeitliche Verlauf der Stromstärke kann somit in Verbindung mit den bekannten geometrischen Abmessungen der Treppensteigvorrichtung Auskunft über die Abmessungen der Treppe geben.

Nach Beendigung des Steigvorgangs wird der Hauptschalter betätigt und die Vorrichtung ausgeschaltet. Die gespeicherten Daten bleiben hierbei erhalten. Wenn anschließend der Hauptschalter bei gedrücktem Steigschalter erneut betätigt wird, ertönen wiederum zwei kurze Signaltöne, die anzeigen, dass die Datenspeicherung gesperrt ist und die gespeicherten Daten geschützt sind. Da der Codierschalter zu diesem Zeitpunkt noch nicht wieder betätigt wurde, zeigt ein schnelles Blinksignal weiterhin den Programmiermodus an. Erst wenn die Bedienperson den Codierschalter in die für den Steigmodus erforderliche Stellung bringt, wird der Programmiermodus beendet und das schnelle Blinksignal erlischt. Die Treppensteigvorrichtung ist nunmehr für einen Steigvorgang bereit.

Der vorstehende erläuterte Lern- bzw. Programmiermodus sollte möglichst nur von erfahrenen Bedienpersonen, insbesondere von Schulungspersonal, beispielsweise bei der Übergabe der Treppensteigvorrichtung vom Hersteller bzw. Händler an den Endverbraucher vorgenommen werden.

Es versteht sich, dass dem Fachmann zahlreiche weitere Möglichkeiten zur Programmierung zur Verfügung stehen. So kann beispielsweise eine durchschnittliche Stufenhöhe einprogrammiert werden oder es können exakte Daten für eine oder mehrere Treppen in einem Speicher der Steuervorrichtung eingegeben werden.

Der Steigvorgang treppabwärts kann grundsätzlich in analoger Weise verlaufen. Grundsätzlich ist der Steigvorgang treppabwärts allerdings einfacher zu handhaben, da sich zwar der Betrag des Kippmoments ändert, normalerweise jedoch nicht die Richtung des Kippmoments, wie dies beim Steigvorgang treppaufwärts der Fall ist. Aus diesem Grunde können die Betriebsmodi für das Aufsteigen einerseits und das Absteigen andererseits unterschiedlich ausgeführt sein.

## Patentansprüche

1. Treppensteigvorrichtung, beispielsweise für Rollstühle,
mit einer Griffeinheit, die einer Bedienperson die Handhabung der Treppensteigvorrichtung ermöglicht,
mit mindestens einem Steigelement (11, 12), das so ausgebildet ist, dass es längs einer vorbestimmten Wegbahn bewegbar ist, die es bei dem Steigvorgang zyklisch durchläuft, wobei es mit dem jeweils nächstgelegenen Treppenabsatz einer Treppe in Berührung gelangen und die Treppensteigvorrichtung auf den nächstgelegenen Treppenabsatz heraufheben oder absenken kann,
mit einem Antriebsmotor zum Antrieb des Steigelements (11, 12) und
mit einer Steuereinrichtung,
**dadurch gekennzeichnet,**
**dass** die Steuereinrichtung dazu ausgelegt ist, den Betrieb des Steigelements (11, 12) so zu steuern, dass der Steigvorgang unterbrochen werden kann, wenn das Steigelement (11, 12) bei dem zyklischen Durchlauf eine vorbestimmte Stellung auf der vorbestimmten wegbahn erreicht.

2. Treppensteigvorrichtung nach Anspruch 1, **dadurch gekennzeichnet, dass** der Gesamtschwerpunkt (SP) der aus der Treppensteigvorrichtung und der damit zu befördernden Last bestehenden Einheit bei der vorbestimmten Stellung des Steigelements (11, 12) zwischen dem Berührungspunkt des Steigelements (11, 12) mit einem Treppenabsatz und dem Berührungspunkt der Treppensteigvorrichtung mit dem nächstgelegenen Treppenabsatz liegt, wenn das Steigelement (11, 12) auf dem Treppenabsatz und die Treppensteigvorrichtung auf dem nächstgelegenen Treppenabsatz aufliegt.

3. Treppensteigvorrichtung nach Anspruch 2, **dadurch gekennzeichnet, dass** die Steuereinrichtung eine Speichereinrichtung aufweist, in welche die vorbestimmte Stellung des Steigelements (11, 12) einprogrammierbar ist.

4. Treppensteigvorrichtung nach Anspruch 3, **dadurch gekennzeichnet, dass** die Steuereinrichtung so ausgelegt ist, dass das Einprogrammieren der vorbestimmten Stellung des Steigelements (11, 12) unter Durchführung eines Steigvorgangs in einem Programmiermodus erfolgen kann.

5. Treppensteigvorrichtung nach Anspruch 4, **dadurch gekennzeichnet, dass** die Steuereinrichtung dazu ausgelegt ist, im Programmiermodus aktuelle Betriebsparameter abzuspeichern, beispielsweise die Stufenhöhe und/oder die Stufentiefe und/oder den Neigungswinkel.

6. Treppensteigvorrichtung nach einem der vorstehenden Ansprüche 1 bis 5, **dadurch gekennzeichnet, dass** die Steuereinrichtung dazu ausgelegt ist, den Betrieb des Steigelements (11, 12) so zu steuern, dass der Steigvorgang jedesmal, wenn das Steigelement (11, 12) die vorbestimmte Stellung erreicht, unterbrochen und in Abhängigkeit von einem Wiederaufnahmesignal fortgesetzt wird.

7. Treppensteigvorrichtung nach Anspruch 6, **gekennzeichnet durch** einen Steigschalter, der **durch** die Bedienperson betätigbar und dazu ausgelegt ist, das Wiederaufnahmesignal auszulösen.

8. Treppensteigvorrichtung nach Anspruch 6, **gekennzeichnet durch** ein von der Bedienperson betätigbares Wiederaufnahme-Schaltelement, wobei das Wiederaufnahmesignal **durch** die Betätigung des Wiederaufnahme-Schaltelements ausgelöst wird.

9. Treppensteigvorrichtung nach Anspruch 6, 7 oder 8, **gekennzeichnet durch** eine Sensoreinrichtung, die dazu ausgelegt ist, einen Betriebszustand der Treppensteigvorrichtung zu erkennen, wobei das Wiederaufnahmesignal **durch** ein Signal der Sensoreinrichtung ausgelöst wird.

10. Treppensteigvorrichtung nach Anspruch 9, **dadurch gekennzeichnet, dass** die Sensoreinrichtung einen Haltekraftsensor (100) aufweist, der dazu ausgelegt ist, die Haltekraft der Bedienperson zu erfassen, wobei das Wiederaufnahmesignal durch ein Signal des Haltekraftsensors (100) ausgelöst wird.

11. Treppensteigvorrichtung nach Anspruch 10, **dadurch gekennzeichnet, dass** die Steuereinrichtung dazu ausgelegt ist, die Wiederaufnahme des Steigvorgangs dann einzuleiten, wenn eine vorbestimmte Veränderung des Wertes der Haltekraft detektiert wird.

12. Treppensteigvorrichtung nach Anspruch 9, 10 oder 11, **dadurch gekennzeichnet, dass** die Sensoreinrichtung einen Neigungswinkelsensor aufweist, der dazu ausgelegt ist, den Neigungswinkel der Vorrichtung zu erfassen, wobei das Wiederaufnahmesignal durch ein Signal des Neigungswinkelsensors ausgelöst wird.

13. Treppensteigvorrichtung nach Anspruch 12, **dadurch gekennzeichnet, dass** die Steuereinrichtung dazu ausgelegt ist, die Wiederaufnahme des Steigvorgangs dann einzuleiten, wenn der Neigungswinkel der Vorrichtung innerhalb eines vorbestimmten Wertebereichs liegt.

14. Treppensteigvorrichtung nach einem der vorstehenden Ansprüche 1 bis 5, **dadurch gekennzeichnet, dass** eine Sensoreinrichtung vorgesehen ist, die dazu ausgelegt ist, Betriebsparameter der Treppensteigvorrichtung zu detektieren, und dass die Steuereinrichtung dazu ausgelegt ist, den Betrieb des Steigelements (11, 12) so zu steuern, dass der Steigvorgang kontinuierlich abläuft, solange ein oder mehrere für den Neigungswinkel relevante Betriebsparameter der Treppensteigvorrichtung innerhalb eines vorbestimmten Wertebereichs liegen, und dass der Steigvorgang unterbrochen wird, wenn die für den Neigungswinkel relevanten Betriebsparameter der Treppensteigvorrichtung außerhalb des vorbestimmten Wertebereichs liegen, wobei das Unterbrechen des Steigvorgangs in der vorbestimmten Stellung des Steigelements (11, 12) erfolgt und der Steigvorgang in Abhängigkeit von einem Wiederaufnahmesignal fortgesetzt wird.

15. Treppensteigvorrichtung nach Anspruch 14, **gekennzeichnet durch** einen Steigschalter, der **durch** die Bedienperson betätigbar und dazu ausgelegt ist, das Wiederaufnahmesignal auszulösen.

16. Treppensteigvorrichtung nach Anspruch 14, **gekennzeichnet durch** ein von der Bedienperson betätigbares Wiederaufnahme-Schaltelement, wobei das Wiederaufnahmesignal **durch** die Betätigung des Wiederaufnahme-Schaltelements ausgelöst wird.

17. Treppensteigvorrichtung nach Anspruch 14, 15 oder 16, **dadurch gekennzeichnet, dass** das Wiederaufnahmesignal durch ein Signal der Sensoreinrichtung ausgelöst wird.

18. Treppensteigvorrichtung nach Anspruch 17, **dadurch gekennzeichnet, dass** die Sensoreinrichtung einen Haltekraftsensor (100) aufweist, der dazu ausgelegt ist, die Haltekraft der Bedienperson zu erfassen, wobei das Wiederaufnahmesignal durch ein Signal des Haltekraftsensors (100) ausgelöst wird.

19. Treppensteigvorrichtung nach Anspruch 18, **dadurch gekennzeichnet, dass** die Steuereinrichtung dazu ausgelegt ist, die Wiederaufnahme des Steigvorgangs dann einzuleiten, wenn eine vorbestimmte Veränderung des Wertes der Haltekraft detektiert wird.

20. Treppensteigvorrichtung nach Anspruch 17, 18 oder 19, **dadurch gekennzeichnet, dass** die Sensoreinrichtung einen Neigungswinkelsensor aufweist, der dazu ausgelegt ist, den Neigungswinkel der Vorrichtung zu erfassen, wobei das Wiederaufnahmesignal durch ein Signal des Neigungswinkelsensors ausgelöst wird.

21. Treppensteigvorrichtung nach Anspruch 20, **dadurch gekennzeichnet, dass** die Steuereinrichtung dazu ausgelegt ist, die Wiederaufnahme des Steigvorgangs dann einzuleiten, wenn der Neigungswinkel der Treppensteigvorrichtung innerhalb eines vorbestimmten Wertebereichs liegt.

22. Treppensteigvorrichtung nach einem der vorstehenden Ansprüche 3 bis 13, 14 bis 17 wenn abhängig von 3 bis 5, und 18 bis 21, **dadurch gekennzeichnet, dass** die Steuereinrichtung dazu ausgelegt ist, in Abhängigkeit von Sensorsignalen, insbesondere in Abhängigkeit von Signalen eines Haltekraftsensors, eines Geschwindigkeitssensors, eines Stufenkantensensors, eines Positionssensors zum Detektieren der momentanen Position des Steigelements (11, 12) oder eines Neigungswinkelsensors, ein für die Bedienperson wahrnehmbares Warnsignal bereitzustellen.

23. Treppensteigvorrichtung nach einem der vorstehenden Ansprüche, **dadurch gekennzeichnet, dass** die Steuereinrichtung von der Bedienperson programmierbar ist.

24. Treppensteigvorrichtung nach einem der vorstehenden Ansprüche, **dadurch gekennzeichnet, dass** sie zwei als Steigelemente (11, 12) fungierende Laufradpaare aufweist, deren beide Laufräder um parallel zu ihrer Mittelachse verlaufende Wellen gegenüber der Trägereinheit (11, 12) verschwenkbar gelagert sind.

25. Treppensteigvorrichtung nach einem der vorstehenden Ansprüche 10, 11, 12 und 13 wenn abhängig von 10, **dadurch gekennzeichnet, dass** der Haltekraftsensor (100) im Bereich der Griffeinheit angeordnet ist.

26. Treppensteigvorrichtung nach Anspruch 25, **dadurch gekennzeichnet, dass** die Griffeinheit Handgriffe aufweist und der Haltekraftsensor dazu ausgelegt ist, die Haltekraft unmittelbar an den Handgriffen zu erfassen.

27. Treppensteigvorrichtung nach einem der vorstehenden Ansprüche 10, 11, 12 und 13 wenn abhängig von 10, 25 und 26, **dadurch gekennzeichnet, dass** der Haltekraftsensor (100) dazu ausgelegt ist, die Haltekraft durch Erfassung eines Biegemoments zu erfassen.

28. Treppensteigvorrichtung nach einem der vorstehenden Ansprüche 10, 11, 12 und 13 wenn abhängig von 10, 25, 26 und 27, **dadurch gekennzeichnet, dass** der Haltekraftsensor (100) im Bereich der Befestigungsmittel der Treppensteigvorrichtung mit der von der Treppensteigvorrichtung zu befördernden Vorrichtung angeordnet ist.

## Claims

1. Stair climbing device, such as for wheel chairs, having a handle unit which enables an operator to handle the stair climbing device, comprising:
at least one climbing element (11, 12) being designed such that it can be moved along a predetermined path which it passes cyclically during the climbing action, wherein the stair climbing element is adapted to get in contact with the respective next step of a stair and can lift or lower the stair climbing device to the next step;
a drive motor for driving the climbing element (11, 12); and
a control unit,
**characterized in that**
said control unit is adapted to control the operation of the climbing element (11, 12) such that the climbing process can be interrupted if the climbing element (11, 12) reaches a predetermined position on the predetermined path during the cyclical travel path.

2. Stair climbing device according to claim 1, **characterized in that** the overall center of gravity (SP) of the unit consisting of the stair climbing device and the load to be transported therewith at the predetermined position of the climbing element (11, 12) lies between the point of contact of the climbing element (11, 12) with a step and the point of contact of the stair climbing device with the next step, if the climbing element (11, 12) rests on the step and the stair climbing device rests on the next step.

3. Stair climbing device according to claim 2, **characterized in that** the control unit comprises a memory unit in which the predetermined position of the climbing element (11, 12) can be programed.

4. Stair climbing device according to claim 3, **characterized in that** the control unit is designed such that programing of the predetermined position of the climbing element (11, 12) can be effected in a programing mode upon performing the climbing process.

5. Stair climbing device according to claim 4, **characterized in that** the control unit is adapted to save current operating parameters in the program mode, for instance the step height and/or the step depth and/or the angle of inclination.

6. Stair climbing device according to any of preceding claims 1 to 5, **characterized in that** the control unit is adapted to control the operation of the climbing element (11, 12) such that, whenever the climbing element (11, 12) reaches the predetermined position, the climbing process is interrupted and continued in dependence on a resumption signal.

7. Stair climbing device according to claim 6, **characterized by** a climbing switch being operable by the operator and being adapted to trigger the resumption signal.

8. Stair climbing device according to claim 6, **characterized by** a resumption switch element operable by the operator, wherein the resumption signal is triggered by switching the resumption switch element.

9. Stair climbing device according to claim 6, 7 or 8, **characterized by** a sensor device which is adapted to detect an operation condition of the stair climbing device, wherein the resumption signal is triggered by a signal of the sensor device.

10. Stair climbing device according to claim 9, **characterized in that** the sensor device comprises a holding force sensor (100) which is adapted to detect the holding force of the operator, wherein the resumption signal is triggered by a signal of the holding force sensor (100).

11. Stair climbing device according to claim 10, **characterized in that** the control unit is adapted to initiate the resumption of the climbing process, if a predetermined change of the value of the holding force is detected.

12. Stair climbing device according to claim 9, 10 or 11, **characterized in that** the sensor device comprises an inclination angle sensor adapted to detect the angle of inclination of the device wherein the resumption signal is triggered by a signal of the inclination angle sensor.

13. Stair climbing device according to claim 12, **characterized in that** the control unit is adapted to initiate resumption of the climbing process, if the inclination angle of the device lies within a predetermined value range.

14. Stair climbing device according to one of the preceding claims 1 to 5, **characterized in that** a sensor device is provided which is adapted to detect operation parameters of the stair climbing device and that the control unit is adapted to control the operation of the climbing element (11, 12) such that the climbing process is effected continuously as long as one or more operation parameters of the stair climbing device being relevant for the angle of inclination lie within a predetermined value range, and that the climbing process is interrupted if the operation parameters of the stair climbing device being relevant for the angle of inclination are not within a predetermined value range, wherein the interruption of the climbing process occurs at the predetermined position of the climbing element (11, 12) and the climbing process is continued depending on a resumption signal.

15. Stair climbing device according to claim 14, **characterized by** a climb switch operable by the operator and being adapted to release the resumption signal.

16. Stair climbing device according to claim 14, **characterized by** a resumption switch element operable by the operator, wherein the resumption signal is triggered by actuation of the resumption switch element.

17. Stair climbing device according to claim 14, 15 or 16, **characterized in that** the resumption signal is triggered by a signal of the sensor device.

18. Stair climbing device according to claim 17, **characterized in that** the sensor device comprises a holding force sensor (100) which is adapted to detect the holding force of the operator, wherein the resumption signal is triggered by a signal of the holding force sensor (100).

19. Stair climbing device according to claim 18, **characterized in that** the control unit is adapted to initiate resumption of the climbing process, if a predetermined change of the value of the holding force is detected.

20. Stair climbing device according to claim 17, 18 or 19, **characterized in that** the sensor device comprises an inclination angle sensor which is adapted to detect the inclination angle of the device, wherein the resumption signal is triggered by a signal of the inclination angle sensor.

21. Stair climbing device according to claim 20, **characterized in that** the control unit is adapted to initiate resumption of the climbing process, if the angle of inclination of the stair climbing device lies within a predetermined value range.

22. Stair climbing device according to one of the preceding claims 3 to 13, 14 to 17, if dependent on claims 3 to 5, and 18 to 21, **characterized in that** the control unit is adapted to provide a warning signal perceptible for the operator, dependent on sensor signals, especially dependent on signals of a holding force sensor, a speed sensor, a step edge sensor, a position sensor for detecting the current position of the climbing element (11, 12) or an inclination angle sensor.

23. Stair climbing device according to any of the preceding claims, **characterized in that** the control unit is programable by the operator.

24. Stair climbing device according to any of the preceding claims, **characterized in that** it comprises two pairs of running wheels functioning as climbing elements (11, 12), said both running wheels thereof being mounted pivotably relative to said support unit (11, 12) around shafts extending parallel to their center axis.

25. Stair climbing device according to any of the preceding claims 10, 11, 12 and 13, if dependent on claim 10, **characterized in that** the holding force sensor (100) is arranged in the region of the handle unit.

26. Stair climbing device according to claim 25, **characterized in that** the handle unit comprises handles and the holding force sensor is adapted to detect the holding force directly at the handles.

27. Stair climbing device according to one of the preceding claims 10, 11, 12 and 13, if dependent on claims 10, 25 and 26, **characterized in that** the holding force sensor (100) is adapted to detect the holding force by detection of a bending moment.

28. Stair climbing device according to one of the preceding claims 10, 11, 12 and 13, if dependent on claims 10, 25, 26 and 27, **characterized in that** the holding force sensor (100) is arranged in the region of the attachment means of the stair climbing device to the device to be transported by the stair climbing device.

## Revendications

1. Dispositif pour monter les escaliers, par exemple pour chaises roulantes, équipé d'une unité de préhension, permettant la manipulation du dispositif pour monter les escaliers par une personne assistante, avec au moins un mécanisme de franchissement (11, 12), formé de telle sorte qu'il puisse se déplacer le long d'une course prédéfinie, qui en fait le tour pendant le mécanisme de franchissement de façon cyclique, pouvant entrer en contact avec le palier intermédiaire le plus proche d'un escalier et le dispositif pour monter les escaliers pouvant monter ou descendre jusqu'au palier intermédiaire le plus proche, avec un moteur comme entraînement du mécanisme de franchissement (11, 12) et avec un dispositif de commande,
**caractérisé par le fait que** le dispositif de commande est conçu pour commander le fonctionnement du mécanisme de franchissement (11, 12) de telle façon que la séquence de montée puisse être interrompue quand le mécanisme de franchissement (11, 12) atteint lors du passage cyclique une position prédéfinie sur la course prédéfinie.

2. Dispositif pour monter les escaliers selon la revendication 1,
**caractérisé par le fait que** le point de gravité total (SP) de l'unité composée du dispositif pour monter les escaliers et de la charge à transporter dans une position prédéterminée du mécanisme de franchissement (11, 12) se trouve entre le point de contact du mécanisme de franchissement (11, 12) avec un palier intermédiaire et le point de contact du dispositif pour monter les escaliers avec le palier intermédiaire le plus proche, lorsque le mécanisme de franchissement (11, 12) s'appuie contre le palier intermédiaire et le dispositif pour monter les escaliers s'appuie contre le palier intermédiaire le plus proche.

3. Dispositif pour monter les escaliers selon la revendication 2,
**caractérisé par le fait que** le dispositif de commande présente un dispositif de mémorisation, dans lequel la position prédéfinie du mécanisme de franchissement (11, 12) est programmable.

4. Dispositif pour monter les escaliers selon la revendication 3,
**caractérisé par le fait que** le dispositif de commande est conçu pour que la programmation de la position prédéfinie du mécanisme de franchissement (11, 12) ait lieu en effectuant une séquence de montée dans un mode de programmation.

5. Dispositif pour monter les escaliers selon la revendication 4,
**caractérisé par le fait que** le dispositif de commande est conçu pour mémoriser en mode Programmation les paramètres de fonctionnement actuels, par exemple la hauteur des marches et/ou la profondeur des marches et/ou l'angle d'inclinaison.

6. Dispositif pour monter les escaliers selon l'une des revendications précédentes 1 à 5,
**caractérisé par le fait que** le dispositif de commande est conçu pour commander le fonctionnement du mécanisme de franchissement (11, 12) de telle sorte que la séquence de montée soit interrompue à chaque fois que le mécanisme de franchissement (11, 12) atteint la position prédéfinie, et continuée en réponse à un signal de reprise.

7. Dispositif pour monter les escaliers selon la revendication 6,
**caractérisé par** un interrupteur de montée pouvant être actionné par une personne assistante et conçu pour déclencher le signal de reprise.

8. Dispositif pour monter les escaliers selon la revendication 6,
**caractérisé par** un interrupteur de reprise pouvant être actionné par une personne assistante, le signal de reprise étant déclenché par l'actionnement de l'interrupteur de reprise.

9. Dispositif pour monter les escaliers selon la revendication 6, 7 ou 8,
**caractérisé par** un dispositif capteur, conçu pour reconnaître un état de marche du dispositif pour monter les escaliers, le signal de reprise étant déclenché par un signal du dispositif capteur.

10. Dispositif pour monter les escaliers selon la revendication 9,
**caractérisé par le fait que** le dispositif capteur présente un capteur de force de retenue (100), conçu pour enregistrer la force de retenue de la personne assistante, le signal de reprise étant déclenché par un signal du capteur de force de retenue (100).

11. Dispositif pour monter les escaliers selon la revendication 10,
**caractérisé par le fait que** le dispositif de commande est conçu pour amorcer la reprise de la séquence de montée, dès qu'une modification prédéfinie de la valeur de la force de retenue est détectée.

12. Dispositif pour monter les escaliers selon la revendication 9, 10 ou 11,
**caractérisé par le fait que** le dispositif capteur présente un capteur d'angle d'inclinaison conçu pour enregistrer l'angle d'inclinaison du dispositif, le signal de reprise étant déclenché par un signal du capteur d'angle d'inclinaison.

13. Dispositif pour monter les escaliers selon la revendication 12,
**caractérisé par le fait que** le dispositif de commande est conçu pour amorcer la reprise de la séquence de montée quand l'angle d'inclinaison du dispositif se trouve dans un domaine de valeurs prédéfini.

14. Dispositif pour monter les escaliers selon l'une des revendications précédentes 1 à 5,
**caractérisé par le fait qu'**un dispositif capteur est prévu, conçu pour détecter les paramètres de fonctionnement du dispositif pour monter les escaliers, et que le dispositif de commande conçu pour commander le fonctionnement du mécanisme de franchissement (11, 12) de telle sorte que la séquence de montée se déroule en continu tant qu'un ou plusieurs paramètres de fonctionnement du dispositif pour monter les escaliers significatifs pour l'angle d'inclinaison se trouvent dans un domaine de valeurs prédéfini, et que la séquence de montée soit interrompue quand les paramètres de fonctionnement du dispositif pour monter les escaliers significatifs pour l'angle d'inclinaison se trouvent en dehors du domaine de valeurs prédéfini, l'interruption de la séquence de montée étant effectuée dans la position prédéfinie du mécanisme de franchissement (11, 12) et la séquence de montée étant continuée en réponse à un signal de reprise.

15. Dispositif pour monter les escaliers selon la revendication 14,
**caractérisé par** un interrupteur de montée pouvant être actionné par une personne assistante et conçu pour déclencher le signal de reprise.

16. Dispositif pour monter les escaliers selon la revendication 14,
**caractérisé par** un interrupteur de reprise pouvant être actionné par une personne assistante, le signal de reprise étant déclenché par l'actionnement de l'interrupteur de reprise.

17. Dispositif pour monter les escaliers selon la revendication 14, 15 ou 16,
**caractérisé par le fait que** le signal de reprise est déclenché par un signal du dispositif capteur.

18. Dispositif pour monter les escaliers selon la revendication 17,
**caractérisé par le fait que** le dispositif capteur présente un capteur de force de retenue (100), conçu pour enregistrer la force de retenue de la personne assistante, le signal de reprise étant déclenché par un signal du capteur de force de retenue (100).

19. Dispositif pour monter les escaliers selon la revendication 18,
**caractérisé par le fait que** le dispositif de commande est conçu pour amorcer la reprise de la séquence de montée, dès qu'une modification prédéfinie de la valeur de la force de retenue est détectée.

20. Dispositif pour monter les escaliers selon la revendication 17, 18 ou 19,
**caractérisé par le fait que** un dispositif capteur présente un capteur d'angle d'inclinaison, conçu pour enregistrer l'angle d'inclinaison du dispositif, le signal de reprise étant déclenché par un signal du capteur d'angle d'inclinaison.

21. Dispositif pour monter les escaliers selon la revendication 20,
**caractérisé par le fait que** le dispositif de commande est conçu pour amorcer la reprise de la séquence de montée, quand l'angle d'inclinaison du dispositif pour monter les escaliers se trouve dans un domaine de valeurs prédéfini.

22. Dispositif pour monter les escaliers selon 3 à 13, 14 à 17 si dépendant de 3 à 5, et 18 à 21,
**caractérisé par le fait que** le dispositif de commande est conçu pour fournir un signal d'avertissement destiné à une personne assistante en réponse à des signaux de capteurs, en particulier en réponse aux signaux d'un capteur de force de retenue, d'un capteur de vitesse, d'un capteur de nez de marche, d'un capteur de position pour détecter la position instantanée du mécanisme de franchissement (11, 12) ou d'un capteur d'angle d'inclinaison.

23. Dispositif pour monter les escaliers selon l'une quelconque des revendications précédentes,
**caractérisé par le fait que** le dispositif de commande est programmable par la personne assistante.

24. Dispositif pour monter les escaliers selon l'une quelconque des revendications précédentes,
**caractérisé par le fait qu'**il présente deux paires de roues mobiles faisant office de mécanismes de franchissement (11, 12), dont les deux roues mobiles sont disposées de façon pivotante autour des broches passant parallèlement à leur axe médian face à l'unité porteuse (11, 12).

25. Dispositif pour monter les escaliers selon l'une des revendications précédentes 10, 11, 12, et 13 si dépendant de 10,
**caractérisé par le fait que** le capteur de force de retenue (100) est disposé dans la zone de l'unité de préhension.

26. Dispositif pour monter les escaliers selon la revendication 25,
**caractérisé par le fait que** l'unité de préhension présente des poignées et que le capteur de force de retenue est conçu pour enregistrer la force de retenue directement au niveau des poignées.

27. Dispositif pour monter les escaliers selon l'une des revendications précédentes 10, 11,12, et 13 si dépendant de 10, 25 et 26,
**caractérisé par le fait que** le capteur de force de retenue (100) est conçu pour enregistrer la force de retenue par l'enregistrement d'un couple de flexion.

28. Dispositif pour monter les escaliers selon l'une des revendications précédentes 10, 11,12, et 13 si dépendant de 10, 25, 26 et 27,
**caractérisé par le fait que** le capteur de force de retenue (100) est disposé dans la zone des moyens de fixation du dispositif pour monter les escaliers avec le dispositif devant être transporté par le dispositif pour monter les escaliers.
